**Europäisches Patentamt**

**European Patent Office**

**Office européen des brevets**

(19)

(11) Veröffentlichungsnummer : **0 391 104 B1**

(12) **EUROPÄISCHE PATENTSCHRIFT**

(45) Veröffentlichungstag der Patentschrift :
05.08.92 Patentblatt 92/32

(51) Int. Cl.⁵ : **C09J 105/06**

(21) Anmeldenummer : **90104947.8**

(22) Anmeldetag : **15.03.90**

(54) **Verfahren zum Verkleben der Nähte von rauchbaren Artikeln.**

(30) Priorität : **03.04.89 DE 3910745**

(43) Veröffentlichungstag der Anmeldung :
**10.10.90 Patentblatt 90/41**

(45) Bekanntmachung des Hinweises auf die
Patenterteilung :
**05.08.92 Patentblatt 92/32**

(84) Benannte Vertragsstaaten :
**AT BE CH DE DK ES FR GB GR IT LI LU NL SE**

(56) Entgegenhaltungen :
**DE-A- 387 086**
**FR-A- 2 310 396**
**US-A- 2 478 170**
**US-A- 3 410 704**
**US-A- 3 499 454**

(73) Patentinhaber : **B.A.T. Cigarettenfabriken
GmbH
Alsterufer 4
W-2000 Hamburg 36 (DE)**

(72) Erfinder : **Schmekel, Gerald, Dipl.-Ing.
Schumacherstrasse 72
W-2200 Elmshorn (DE)**
Erfinder : **Stiller, Wilfried, Dr., Dipl-Ing.
Am Meierhof 28
W-2081 Holm (DE)**
Erfinder : **Meyer, Meinhard, Dipl-Ing.
Ziegeleiweg 38
W-2081 Appen-Unterglinde (DE)**
Erfinder : **Möller, Knut, Dipl.-Ing.
Caprivistrasse 52
W-2000 Hamburg 55 (DE)**

(74) Vertreter : **Schwabe - Sandmair - Marx
Stuntzstrasse 16
W-8000 München 80 (DE)**

## Beschreibung

Die Erfindung betrifft ein Verfahren zum Verkleben der Nähte von rauchbaren Artikeln sowie die verwendung von Pektin in einer Leimschicht in diesem Verfahren.

Die Herstellung von Fabrikcigaretten unterlag in den letzten Jahren einem großen technologischen Wandel. Zwar hat sich das Prinzip der strangbildenen Maschine nicht grundsätzlich geändert, aber die Fertigungsgeschwindigkeit erreichte mit der Inbetriebnahme neuer Maschinengenerationen sehr hohe Fertigungsstückzahlen (10 000 Cig/min), das entspricht 630 m/min. Stranggeschwindigkeit. Die Nutzung dieser Hochgeschwindigkeitsmaschinen muß dabei einhergehen mit der Anpassung der Basismaterialien zur Tabakstrang-Herstellung. Insbesondere der Naht-Verleimungsprozeß muß entsprechend den neuen Anforderungen verbessert werden.

In der US-A 3,499,454 wird ein Verfahren zur Herstellung von Platten (sheets) aus rekonstituiertem Tabak beschrieben, wobei in den sheets zum Zusammenhalt der Teile von Tabakblättern innerhalb des Platten-Körpers ein Binder verwendet wird, der Tabakpektine natürlicher Herkunft umfaßt. Die Problemstellung, die Nähte rauchbarer Artikel wie beispielsweise Cigaretten, insbesondere die Nähte von Cigarettenpapier, in einem Hochleistungs- und Hochgeschwindigkeits-Verfahren zu verkleben, ist aus dieser Druckschrift nicht bekannt. Außerdem ist dieser Druckschrift auch ein rauchbarer Artikel aus Tabakmaterial mit einer Umhüllung nicht bekannt, in dem die Nähte der Umhüllung mit einer Leimschicht auf der Basis von Pektinen verklebt sind.

Die heute benutzten Nahtleime basieren auf folgenden chemischen Typen:

```
1) Polyvinylalkohole   =  nicht natürliche Herkunft
2) Stärke, Dextrin     =        natürliche Herkunft
3) Gelatine            =        natürliche Herkunft
```

Polyvinylalkohole (PVA) erfüllen sowohl in maschinentechnischer als auch in rauchsensorischer Sicht alle Anforderungen. Insbesondere die Verwendung von einfachen Dosiersystemen (Gravity Feeder = Schwerkraftfördersystem) und die Resistenz gegenüber bakterieller Zersetzung sowie gegen Schimmelbildung erklärt die bevorzugte Anwendung von PVA-Dispersionsleimen in der Cigarettenindustrie. Es gibt jedoch Bestrebungen, die Zulassung von PVA-Leimen für die Verwendung in der Tabakindustrie in Frage zu stellen.

Stärke/Dextrin und Gelantine sind im Vergleich zum PVA-Leim beim augenblicklichen Entwicklungsstand mit Nachteilen behaftet, die einer breiteren Anwendung im Wege stehen. Zu nennen sind in diesem Zusammenhang vor allem:

1) Die erreichbaren Verarbeitungsgeschwindigkeiten liegen bei maximal 5000 Cig./min., lassen also die Nutzung von modernen Cigarettenmaschinen nicht zu.
2) Die Feststoff-Konzentration liegt bei Stärke/Dextrin maximal bei ca. 30 %, also weit unterhalb der von PVA-Leimen mit ca. 50 %, wobei der Bleeding-Effekt zum Problem werden kann.
3) Ihre Viskosität ist höher und erfordert andere, aufwendigere Auftragssysteme.
4) Ihre hohe Keimzahlbelastung, die durch Zusätze oder physikalische Maßnahmen reduziert werden muß (Langzeitstabilität).
5) Das Entstehen von rauchsensorisch aktiven Verbrennungsprodukten, die die Rauch-Produkt-Qualität negativ beeinflussen, und
6) die Temperatur der für das Abdampfen des Flüssigkeitsanteils erforderlichen Plätte muß aufgrund des schwächeren Naßklebeverhaltens und des größeren Wassergehaltes höher sein.

Der Erfindung liegt deshalb die Aufgabe zugrunde, ein Verfahren zum Verkleben der Nähte von rauchbaren Artikeln zu schaffen, bei dem die oben erwähnten Nachteile nicht auftreten. Insbesondere soll ein Verfahren unter Verwendung vo Leim auf Basis von natürlichen Materialien vorgeschlagen werden, wobei sich der Leim in gleicher Weise wie die bisher üblichen PVA-Leime verarbeiten läßt, keine rauchsensorischen Probleme bereitet und auch in einem Verfahren auf den heutigen Cigarettenmaschinen mit Stranggeschwindigkeiten von mehr als 10 m/sec. (= 10 000 Cig./ min.) eine ausreichende mechanische Festigkeit der Nähte gewährleistet.

Dies wird erfindungsgemäß durch ein Verfahren mit den im kennzeichnenden Teil des Anspruchs 1 angegebenen Merkmalen erreicht.

Zweckmäßige Ausgestaltungen dieses Verfahrens werden durch die Merkmale der Unteransprüche 2 bis 13 definiert.

Gemäß einem weiteren Aspekt liegt der Erfindung die Aufgabe zugrunde, eine Verwendung von Pektin in einer Leimschicht auzugeben, die sich zum Einsatz in einem maschinellen Klebeverfahren für Cigaretten-Umhüllungen eignet.

Dies wird erfindugsgemäß durch die im Anspruch 16 angegebenen Merkmale erreicht.

Schließlich soll die Erfindung noch einen rauchbaren Artikel vorschlagen, dessen Naht eine ausreichende mechanische Festigkeit ohne geschmackliche Nachteile hat.

Dies wird durch die Merkmale des Anspruchs 14 sowie des Anspruchs 15 definiert.

Im vorliegenden Zusammenhang wird der Begriff "Pektin" als Sammelbegriff für gereinigte Kohlenhydrate verstanden, die durch wässrige Extraktion, bspw. aus Citrusfrüchten bzw. Äpfeln gewonnen werden. Das Basismonomer leitet sich von der D-Galacturonsäure ab. Charakterisiert wird Pektin normalerweise durch den Veresterungsgrad, der die unterschiedlichen chemischen Eigenschaften maßgeblich beeinflußt. Weiterhin gibt es chemisch modifiziertes, amidiertes Pektin, das anstatt der Methoxylgruppe teilweise die Amidgruppe im Makromolekül enthält.

Es ist darauf hinzuweisen, daß grundsätzlich alle im Hander erhältlichen Pektin-Typen für die Herstellung des in dem erfindungsgemäßen Verfahren verwendeten"Hochgeschwindigkeitsleimes" geeignet sind. Unterschiede bestehen nur in der rauchsensorischen Eignung in Verbindung mit der verwendenten Tabakmischung, wobei im Einzelfall das Fertigprodukt auf rauchsensorische Qualität getestet werden muß. Bevorzugterweise wird in dem erfindungsgemäßen Verfahren ein Leim verwendet, in dem das Pektin in einer wäßrigen Dispersionvorliegt. Besonders bevorzugt wird eine wäßrige alkoholisdre Dispersion.

Es sollen vorweg grundsätzliche Betrachtungen für das Leimherstellungsverfahren gemacht werden, um anschließend die Umsetzung näher zu erläutern.

Aufgrund der ansich schlechten Verklebungseigenschaften von Pektin ist es notwendig, möglichst hoch konzentrierte Pektinlösungen herzustellen. Normalerweise ist die Löslichkeit das Pektins in Wasser kleiner 10 %, wobei nicht fließende und damit nicht anwendbare Gele erzeugt werden. Eine Erhöhüng der Temperatur über die sogenannte "Geltemperatur" hinaus ist nicht zweckmäßig, da dann Stabilitätsprobleme auftreten und eine beheizbare Auftragsvorrichtung notwendig wird, die wiederum zusätzliche Investitionen zur Folge haben würde. Es ist also erforderlich, die "Kristallisationsneigung" zu verringern, oder mit anderen Worten die thermische Bewegung des 3-dimensionalen Netzwerkes zu erhöhen, um die Gelierung bei Raumtemperatur zu unterdrücken. Ein bevorzugter Ansatzpunkt für diese chemische Modifikation ist die Spaltung oder der Kettenabbau des Pektins bei nahezu neutralem pH, die sogenannte Beta-Eliminierung, die das Makromolekül in kleinere Einzelteile zerlegt und die Viscosität erniedrigt. Grundsätzlich stehen für diesen Prozeß auch Enzymsysteme zur Verfügung, die aber aus kinetischen und sensorischen Gründen als weniger geeignet erscheinen. Eine weitere Alternative ist die Spaltung in stark saurer Umgebung ("Holzverzuckerung"), die aber ebenfalls mit Nachteilen behaftet ist.

Die besonders bevorzugte Art des Kettenabbaus bei nahezu neutralem pH wird durch die Einstellung des pH-Wertes auf ca. 6 mit Natronlauge, Kalilauge und/oder gasförmiges Ammoniak bzw. Ammoniaklösung eingeleitet und mit erhöhter Temperatur verstärkt und fortgesetzt, und zwar bei 80 bis 90°C. Bei diesem Verkochungsprozeß sinkt der pH-Wert des Mediums wieder (Teilentesterung). In dem erfindungsgemäßen Verfahren wird mit Vorteil ein Leim verwendet, in dem das Pektin ein Mittleres Molekulargewicht von 10.000 bis 80.000 (g/mol), insbesondere von 20.000 bis 40.000 (g/mol) aufweist. Weiter bevorzugt wird ein Leim verwendet, in dem das Pektin einen Veresterungsgrad von 20 bis 80%, insbesondere von 40 bis 65%, hat. Durch erneute Zugabe von Pektin lassen sich hiermit gut fließende Dispersionen herstellen, die hohe Feststoffkonzentrationen und damit große Klebkraft besitzen. In dem erfindungsgemäßen Verfahren wird ein Leim verwendet, der einen Auteil von 5 bis 40 Gew.-% (Trockensubstanz) Pektin, bevorzugt 10 bis 30 Gew-%, besonders bevorzugt 20 bis 25 Gew.-%, aufweist.

Die Verwendung von mikrobistatisch wirksamen Konservierungsmitteln ist bei natürlichen Produkten für die Langzeitstabilität von entscheidender Bedeutung. Die meisten erlaubten Zusatzstoffe haben ihr Wirkungsoptimum im schwach sauren Bereich (pH-Wert 2 bis 6) und sind deshalb ohne pH-Wert-Änderung des Pektin-Leimes direkt anwendbar. Zu nennen wären insbesondere die für Nahtleime von rauchbaren Artikeln explicit erlaubten Konservierungsstoffe Sorbinsäure (E 200), Natriumsorbat (E 201), Kaliumsorbat (E 202), und Calciumsorbat (E 203), Benzoesäure (E 210), Natriumbenzoat (E 211), para-Hydroxybenzoesäure ethylester und -propylester (E 214, E 216) sowie deren Natriumsalze (E 215, E 217).

Ein weiterer Vorteil des Leims ist die leichte Einbringung von Alkohol, der verdünnend und gleichzeitig unter Erniedrigungder Uberflächenspannung wirkt. Nach den gemachten Erfahrungen ist die Verwendung von Ethylalkohol besonders vorteilhaft, der gleichzeitig auch Konservierungseffekt hat.

Mit den gebräuchlichen Tensiden kann zwar ein ähnlicher Effekt erzeugt werden; diese Mittel scheiden jedoch wegen der Tabakverordnung aus.

Durch die Erniedrigung der Oberflächenspannung, die entscheidenden Einfluß auf das Penetrations- und Netzvermögen hat, ist es auch möglich, allgemein als schlecht verklebbar geltende Papiere zu verarbeiten.

Die Leimnaht hat bei natürlichen Klebern eine größere Sprödigkeit und ist deshalb den PVA-Leimen unterlegen. Es wurde bei Versuchen herausgefunden, daß Zusätze an monomeren/dimeren Zuckern (Glucose, Sorbit, Invertzucker, Saccharose) eine Flexibilitätssteigerung der Naht bewirken und gleichzeitig das Naßkleberverhalten verbessern. Bevorzugt werden Mengen von maximal 5%, bezogen auf das Gesamtgewicht des Leims.

In der Praxis ist es oft wichtig, die Leimauftragsspur bei der Produktion mit einfachen Mitteln sichtbar zu machen. Bei Stärkeleimen ist durch den Auftrag einer Jodlösung auf die Naht und dadurch Bildung der bekannten Jod-Einschlußverbindung eine Blau-Färbung der Leimauftragsspur leicht erreichbar, so daß die Gleichmäßigkeit der Leimspur überprüft werden kann. Durch geringe Zusätze an Stärke (maximal 1 Gew.-%) kann dieser Effekt bei einem Leim auf der Basis von Pektin ebenfalls erzielt werden.

Diese Leime lassen sich bei Temperaturen zwischen 15°C und 50°C auftragen, und zwar ohne Erwärmung, sind also bei klimatisierten Cigarettenmaschinen verwendbar, die eine Temperatur von 23°C und eine Luftfeuchtigkeit von 60 % haben.

Die Erfindung betrifft auch einen rauchbaren Artikel mit einem Stangteil aus Tabakmaterial, einer Umhüllung für den Strangteil, insbesondere einer Umhüllung aus Cigarettenpapier, und mit einer Leim schicht zum Verklebender Nacht der Umhüllung. Der Artikel ist dadurch gekennzeichnet, daß für die Leimschicht ein Leim auf der Basis von Pektinen verwendet wird, in dem der Anteil an Pektin im Bereich von 5 bis 40 Gew.-% Trokkensubstanz liegt. Die Erfindung wird im folgenden anhand von Beispielen näher erläutert.

Beispiel 1

1120 g destilliertes Wasser werden auf ca. 60°C erhitzt, und 93 g eines amidierten Pektins mit einem sehr guten Rührwerk portionsweise eingetragen. Während des Eintrages erhitzt sich die Mischung durch die Energieübertragung des Rührwerkes auf ca. 80°C. Der sich einstellende pH-Wert beträgt 3,2. Diese viskose Lösung wird nun tropfenweise mit 30 % NaOH (ca. 20g) versetzt, bis der pH-Wert auf 6 steigt. Die Lösung wird unter ständigem Rühren und gleichzeitige Abnahme des pH-Wertes und der Viskosität bei ca 80°C weiter erhitzt.

Nach ca. 15 Min. bleibt der pH-Wert konstant bei 5,5; nun werden nochmals 93 % Pektin eingetragen. Der pH-Wert nach dem Eintrag beträgt 3,8, die Viskosität steigt. Die sich langsam verdunkelnde Lösung wird erneut auf pH 6 mit NaOH alkalisiert (ca. 30g) und unter Abnahme des pH-Wertes bei 80°C nachgerührt, und zwar für 15 Minuten. Die Viskosität sinkt erneut und die gewünschte Endkonzentration an Pektin (in diesem Beispiel 20 Gew.-%) wird durch Eintrag von 93 g Pektin eingestellt.

Die Abkühlung des Leimes erfolgt ohne Agitation, um Lufteinschlüsse zu reduzieren.

Das Viskositäts-Temperatur-Verhalten dieses Leimes wird aus der folgenden Übersicht ersichtlich
80°C ⇒ 600 mPs, 70°C ⇒ 840 mPs, 60°C ⇒ 1380 mPs,
50°C ⇒ 2100 mPs, 40°C ⇒ 3300 mPs, 30°C ⇒ 5010 mPs
20°C ⇒ 8100 mPs

Der Leim hat das Ausehen einer dunkelgelben, viskosen Lösung, ist fließfähig und zeigt keine Gelierneigung.

Besonders geeignet ist dieser Leim als Cigarettenpapier-Nahtleim für Cigarettenmaschinen mit Fertigungsstückzahlen von bis zu 10 000 Cig./min. mit nicht beheizbaren Auftragssystemen, die niedrig poröse Cigarettenpapiere (Porosität < 50 IU) benutzen. Der Leimverbrauch liegt zwischen 1,2 und 1,9g/1000 Cigarettenkörper (63 mm).

Im Vergleich zum PVA-Leim sind keine sensorischen Auffälligkeiten erkennbar.

Der Leim hat bei Lagerung im Kühlschrank (bei 10°C) eine begrenzte Stabilität von ca. sechs Wochen.

Beispiel 2

Nach dem gleichen Verfahren wird ein Lösung eines niedrig veresterten Pektins (Veresterungsgrad 40 %) mit einer Konzentration von 25 Gew.-% hergestellt, wobei der Eintrag des Pektins in vier gewichtsgleichen Stufen erfolgt.

Der Leim hat das Aussehen einer dunkelgelben Lösung, ist hochviskos und bei Raumtemperatur kaum fließfähig. Die Viskosität bei 20°C beträgt 9950 mPs.

Besonders geeignet ist dieser Leim als Cigarettenpapier-Nahtleim für schnelle Cigarettenmaschinen (10 000 Cig./min.) und Papiere hoher Porosität (> 50 IU), oder als alternativer Kleber für die Beleimung von Filterbelagpapieren; der Cigarettennaht-Leimverbrauch liegt zwischen 1,3 und 2g/1000 Cigarettenkörper (63 mm).

Im Vergleich mit dem Leim nach Beispiel 1 hat dieser Leim mehr Süße und Fülle, aber keine Erhöhung der Irritation, kein "Off Taste" (im Vergleich mit PVA-Leim).

Der Leim ist bei Aufbewahrung im Kühlschrank bei 10°C für ca. sechs Wochen gebrauchsfähig.

### Beispiel 3

Um die Haltbarkeit eines Pektin-Fertigleimes zu erhöhen, wird aus einem hochveresterten Pektin (Veresterungsgrad 60 %) eine Lösung nach dem Beispiel 1 mit einer Soll-Konzentration von 20 Gew.-% hergestellt. Abweichend vom Beispiel 1 wird das erwärmte destillierte Wasser mit Kaliumsorbat versetzt, so daß sich eine 0,2 % Konzentration an Konservierungsmittel in dem Fertigleim ergibt. Dieser Leim wird mit unterschiedlichen Umweltbedingungen konfrontiert (Klima-Simulator) und in Zeitabständen auf Keimzahlvermehrung untersucht. Dabei zeigt sich, daß die Grund-Keimzahl-Belastung nicht nennenswert zunimmt und in dem vorgegebenen Untersuchungszeitraum (sechs Monate) kein Pilzbefall sichtbar wird.

Der Leim hat das Aussehen einer dunkelgelben Lösung, zeigt keine Gelierneigung und ist bei Raumtemperatur fließfähig.

Besonders geeignet ist dieser Leim für Cigaretten-Nahtleim für schnelle Cigarettenmaschinen (100 000 Cig./min.) und/oder für Länder mit extremen Klimabelastungen (tropische Länder).

Im Vergleich zu PVA-Leimen hat dieser Leim eine angenehme Raumnote, mehr Fülle, kein "Off Taste", und leichte Gewürznote. Selbst unter schwierigsten Lagerbedingungen, das heißt erhöhte Raumtemperaturen (bis zu 40°C) und hohen Luftfeuchtigkeiten ist dieser Leim sechs Monate haltbar.

### Beispiel 4

Es ist in der Tabakindustrie bekannt, daß bei gegebenen chemischen Voraussetzungen als Zusatzstoffe aus sensorischer Sicht möglichst Kalium- bzw. Ammonium-Salze zu verwenden sind. Deshalb ist folgende Rezeptur besonders geeignet:

1120 g einer wässrigen Saccharose-Lösung (5 %) werden auf 60°C erhitzt und langsam mit einem guten Rührwerk 100g einen hochveresterten Pektins (70 %) eingetragen. (pH-Wert 3,3). Diese Lösung wird vorsichtig mit einer Ammoniaklösung (32 Gew.-%) auf pH 6 gebracht und ca. 30 Minuten lang auf 90°C erhitzt, bis kein Ammoniak-Geruch mehr wahrnehmbar ist. In diese heiße Lösung wird erneut Pektin (100g) eingetragen und wiederum mit Ammoniak alkalisiert. Nach dem Verflüchtigen des Ammoniak-Geruches wird die letzte Portion an Pektin (100g) eingetragen und mit Citronensäure auf pH 3,5 eingestellt. Diese Dispersion wird ohne Agitation, um Lufteinschlüsse zu vermeiden, abgekühlt.

Der Leim hat das Aussehen einer gelblich gefärbten Lösung, ist fließfähig, und zeigt keine Gelierneigung. Er ist besonders geeignet als Cigarettennahtleim für alle Cigarettenmaschinen und hat eine hohe Nahtflexibilität (beim Bewegen der Naht kaum "Ermüdungsbrüche"). Dieser Leim kann als aktives Instrument in die Produktentwicklung mit einbezogen werden, da ein eigenständiger Geschmackscharakter vorhanden ist.

Die sensorische Beurteilung ergibt, daß der Leim einen dunklen Charakter sowie leichte Süße hat und vollmundig ist. Im Vergleich zu PVA-Leimen stellt dies eine positive Änderung dar.

Die Haltbarkeit im Kühlschrank (10°C) beträgt acht Wochen.

### Patentansprüche

1. Verfahren zum maschinellen Verkleben der Nähte von rauchbaren Artikeln, worin ein Leim mit einem Anteil von 5 bis 40 Gew.-% Trockensubstanz Pektin verwendet wird.

2. Verfahren nach Anspruch 1, worin ein Leim verwendet wird, in dem das Pektin in einer wäßrigen Dispersion vorliegt.

3. Verfahren nach Anspruch 1 oder Anspruch 2, worin ein Leim verwendet wird, in dem das Pektin in einer wäßrigen alkoholischen Dispersion vorliegt.

4. Verfahren nach einem der Ansprüche 1 bis 3, worin ein Leim mit einem Anteil von 10 bis 30 Gew.-%, insbesondere 20 bis 25 Gew.-%, Trockensubstanz Pektin verwendet wird.

5. Verfahren nach einem der Ansprüche 1 bis 4, worin ein Leim verwendet wird, in dem das Pektin ein mittleres Molekulargewicht von 10.000 bis 80.000 (g/mol), insbesondere von 20.000 bis 40.000 (g/mol) aufweist.

6. Verfahren nach einem der Ansprüche 1 bis 5, worin ein Leim verwendet wird, dem ein Konservierungsmittel zugesetzt wurde, insbesondere Sorbinsäure, Natriumsorbat, Kaliumsorbat, Calciumsorbat, Benzoesäure, Natriumbenzoat, Parahydroxybenzoesäureethylester und/oder -propylester sowie deren Natriumsalze.

7. Verfahren nach Anspruch 6, worin ein Leim verwendet wird, dem als Konservierungsmittel ein Alkohol, insbesondere Ethylalkohol, zugesetzt wurde.

8. Verfahren nach einem der Ansprüche 6 oder 7, worin ein Leim verwendet wird, in dem der Anteil an Konservierungsmittel maximal 1 Gew.-%, insbesondere 0,2 bis 0,5 Gew.-%, beträgt.

9. Verfahren nach einem der Ansprüche 1 bis 8, worin ein Leim verwendet wird, dem ein Indikator zugesetzt wurde, insbesondere Stärke zugesetzt wurde.

10. Verfahren nach Anspruch 9, worin ein Leim verwendet wird, dem ein Indikator in einer Menge von maximal 1 Gew.-% zugesetzt wurde.

11. Verfahren nach einem der Ansprüche 1 bis 10, worin ein Leim verwendet wird, dem ein Feuchthaltemittel, insbesondere ein mono-merer/dimerer Zucker, zugesetzt wurde.

12. Verfahren nach Anspruch 11, worin ein Leim verwendet wird, dem ein Feuchthaltemittel in einer Menge von maximal 5 %, bezogen auf das Gesamtgewicht, zugesetzt wurde.

13. Verfahren nach einem der Ansprüche 1 bis 12, worin ein Leim verwendet wird, in dem das Pektin einen Veresterungsgrad von 20 bis 80 %, insbesondere von 40 bis 65 %, hat.

14. Rauchbarer Artikel mit einem Strangteil aus Tabakmaterial, einer Umhüllung für den Strangteil, insbesondere aus Cigarettenpapier, und mit einer Leimschicht zum Verkleben der Naht der Umhüllung, dadurch gekennzeichnet, daß für die Leimschicht ein Leim auf der Basis von Pektinen verwendet wird, in dem der Anteil an Pektin im Bereich von 5 bis 40 Gew.-% Trockensubstanz liegt.

15. Rauchbarer Artikel nach Anspruch 14, herstellbar nach einem Verfahren gemäß der Ansprüche 1 bis 13.

16. Verwendung von Pektin in einer Menge im Bereich von 5 bis 40 Gew.-% (Trockensubstanz) in einer Leimschicht zum Verkleben der Naht einer Umhüllung, insbesondere einer Cigarettenpapier-Umhüllung, eines rauchbaren Artikels.

## Claims

1. A method for mechanically gluing the seams of smokeable articles, in which a glue is used which contains from 5 to 40% by weight dry pectin as a dry substance.

2. A method according to claim 1, in which a glue is used in which the pectin is present in an aqueous dispersion.

3. A method according to claim 1 or claim 2, in which a glue is used in which the pectin in present in an aqueous alcohol dispersion.

4. A method according to one of claims 1 to 3, in which a glue is used which contains from 10 to 30% and in particular 20 to 25% by weight of pectin as a dry substance.

5. A method according to one of claims 1 to 4, in which a glue is used in which the pectin has a mean molecular weight of 10,000 to 80,000 (g/mol), and in particular 20,000 to 40,000 (g/mol).

6. A method according to one of claims 1 to 5, in which a glue is used to which a preservative has been added, particularly sorbic acid, sodium sorbate, potassium sorbate, calcium sorbate, benzoic acid, sodium benzoate, parahydroxy benzoic acid ethyl ester and/or propyl ester as well as their sodium salts.

7. A method according to claim 6, in which a glue is used to which alcohol, particularly ethyl alcohol, has been added as a preservative.

8. A method according to one of claims 6 or 7, in which a glue is used in which the proportion of preservative amounts to a maximum of 1% and in particular 0.2 to 0.5% by weight.

9. A method according to one of claims 1 to 8, in which a glue is used to which an indicator, particularly starch, has been added.

10. A method according to claim 9, in which a glue is used to which an indicator in a quantity of not more than 1% by weight has been added.

11. A method according to one of claims 1 to 10, in which a glue is used to which a humectant, particularly a mono-meric/dimeric sugar has been added.

12. A method according to claim 11, in which a glue is used to which a humectant has been added in a quantity of not more than 5% in relation to the total weight.

13. A method according to one of claims 1 to 12, in which a glue is used in which the pectin has an esterification level of 20 to 80% and in particular of 40 to 65%.

14. A smokeable article with a rod part consisting of tobacco material, a wrapping for the rod part, consisting particularly of cigarette paper, and with a coating of glue for sticking the seam of the wrapping, characterised in that for the glue coating a pectin-based glue is used in which the proportion of pectin is in the range from 5 to 405 by weight of dry substance.

15. A smokeable article according to claim 14, which can be produced by a method according to claims 1 to 13.

16. Use of pectin in a quantity in the range from 5 to 40% by weight (dry substance) in a layer of glue for sticking the seam of a wrapper, particularly a cigarette paper wrapper of a smokeable article.

## Revendications

1. Procédé pour l'encollage mécanique des joints d'articles fumables, dans lequel on utilise une colle ayant une teneur en pectine allant de 5 à 40% en poids (rapportée à la substance sèche).

2. Procédé selon la revendication 1, dans lequel on utilise une colle dont la pectine se présente sous forme de dispersion aqueuse.

3. Procédé selon la revendication 1 ou la revendication 2, dans lequel on utilise une colle dont la pectine se présente sous forme d'une dispersion aqueuse alcoolique.

4. Procédé selon l'une des revendications 1 à 3, dans lequel on utilise une colle ayant une teneur en pectine allant de 10 à 30% en poids, et en particulier de 20 à 25% en poids rapportée à la substance sèche.

5. Procédé selon l'une des revendications 1 à 4, dans lequel on utilise une colle dont la pectine présente un poids moléculaire moyen allant de 10.000 à 80.000 (g/mole) et en particulier de 20.000 à 40.000 (g/mole).

6. Procédé selon l'une des revendications 1 à 6, dans lequel on utilise une colle à laquelle on a ajouté un agent de conservation, et en particulier de l'acide sorbique, du sorbate de sodium, du sorbate de potassium, du sorbate de calcium, de l'acide benzoïque, du benzoate de sodium, de l'ester éthylique et/ou de l'ester propylique de l'acide para-hydroxybenzoïque, ainsi que leurs sels sodiques.

7. Procédé selon la revendication 6, dans lequel on utilise une colle à laquelle on a ajouté comme agent de conservation un alcool, et en particulier de l'alcool éthylique.

8. Procédé selon l'une des revendications 6 ou 7, dans lequel on utilise une colle dont la teneur en agent de conservation atteint au maximum 1% en poids et est comprise particulièrement entre 0,2 et 0,5% en poids.

9. Procédé selon l'une des revendications 1 à 8, dans lequel on utilise une colle à laquelle on a ajouté un indicateur et à laquelle on a ajouté en particulier de l'amidon.

10. Procédé selon la revendication 9, dans lequel on utilise une colle à laquelle on a ajouté un indicateur en proportion atteignant au maximum 1% en poids.

11. Procédé selon l'une des revendications 1 à 10, dans lequel on utilise une colle à laquelle on a ajouté un agent d'humidification, et en particulier un sucre monomère/dimère.

12. Procédé selon la revendication 11, dans lequel on utilise une colle à laquelle on a ajouté un agent d'humidification en proportion atteignant 5% au maximum rapportée au poids total.

13. Procédé selon l'une des revendications 1 à 12, dans lequel on utilise une colle dont la pectine a un degré d'estérification allant de 20 à 80%, et en particulier de 40 à 65%.

14. Article fumable avec un brin central de tabac, une enveloppe pour le brin central, et en particulier une enveloppe en papier à cigarette et avec une couche de colle pour encoller le joint de l'enveloppe, caractérisé en ce que l'on utilise pour la couche de colle une colle à base de pectine dans laquelle la teneur en pectine est comprise dans la gamme de 5 à 40% en poids rapportée à la substance sèche.

15. Article fumable selon la revendication 14, pouvant être fabriqué selon le procédé des revendications 1 à 13.

16. Utilisation de pectine en proportion comprise dans la gamme de 5 à 40% en poids (rapportée à la substance sèche) dans une couche de colle pour encoller le joint d'une enveloppe, et en particulier d'une enveloppe de papier à cigarette d'un article fumable.